# FASCICULE DE BREVET EUROPEEN

(11) **EP 1 881 301 B1**
(45) Date de publication et mention de la délivrance du brevet: **10.03.2010**
(21) Numéro de dépôt: 07013662.7
(22) Date de dépôt: 12.07.2007
(51) Int. Cl.: G01D 5/48

(54) **Procédé de fonctionnement d'un dispositif de capteur domotique autonome pour détecter l'existence et/ou mesurer l'intensité d'un phénomène physique**
Verfahren zum Betrieb einer autonomen Sensorvorrichtung für den Hausgebrauch zum Erfassen der Existenz und/oder zum Messen der Intensität eines physikalischen Phänomens
Operating method of an autonomous home automation sensor device for detecting the existence and/or measuring the intensity of a physical phenomenon

(30) Priorité: 19.07.2006 FR 0606560
(43) Date de publication de la demande: 23.01.2008
(73) Titulaire: Somfy SAS, 74300 Cluses (FR)
(72) Inventeur: Neumann, Alexander, 72072 Tübingen (DE)
(74) Mandataire: Bugnion Genève

(56) Documents cités:
- WO-A-03/056279
- WO-A-2005/114610
- DE-U1- 29 923 046
- US-A1- 2006 148 410
- DATABASE INSPEC [Online] THE INSTITUTION OF ELECTRICAL ENGINEERS, STEVENAGE, GB; 2005, LEDER E ET AL: "Solar powered low-power sensor module with a radio communication and a user interface" XP002433412 Database accession no. 8913831 & 2005 IEEE SENSORS 30 OCT.-3 NOV. 2005 IRVINE, CA, USA, 2005, page 4 pp., 2005 IEEE Sensors (IEEE Cat. No.05CH37665C) IEEE Piscataway, NJ, USA ISBN: 0-7803-9056-3

## Description

L'invention se rapporte à un dispositif de capteur domotique et autonome pour la mesure de l'intensité d'un phénomène physique et destiné en particulier à la commande d'un dispositif motorisé de protection solaire tel que notamment un store ou un volet roulant.

Il est connu d'utiliser un dispositif de protection solaire motorisé pour réguler la pénétration des rayons solaires dans un bâtiment à travers d'une ouverture pratiquée dans celui-ci. Dans le cas d'un contrôle automatique, un capteur de luminosité est prévu pour émettre des signaux de commande au dispositif de protection solaire motorisé afin de déplacer un élément mobile pour obtenir un niveau de confort déterminé. Afin de diminuer les contraintes de câblage de l'installation, il est connu de prévoir des moyens permettant une communication sans fil entre le capteur et le dispositif de protection solaire. Dans le but de limiter encore les contraintes de câblage, il est connu d'utiliser des capteurs fonctionnant de manière autonome. Ces capteurs autonomes comprennent un moyen de stockage d'énergie électrique tel qu'une batterie et éventuellement des moyens de conversion d'une énergie (par exemple solaire) en une énergie électrique.

Il est connu de la demande JP 02-091348, un procédé de fonctionnement d'une installation dans laquelle, un capteur émet de manière périodique un signal d'état afin d'assurer une fonction de sécurité. La réception périodique de ce signal par un dispositif domotique assure à ce dernier que le capteur est opérationnel. Dans le cas, où le signal d'état n'est pas reçu, le dispositif domotique entre dans un mode sécurité.

Le principal problème posé par ces capteurs autonomes concerne la maîtrise de l'énergie. En particulier, il est nécessaire d'assurer une autonomie de fonctionnement suffisante même lorsque les conditions extérieures au dispositif sont telles que pratiquement aucune énergie ne peut être transformée en énergie électrique (par exemple la nuit pour les dispositifs de capteur comprenant un panneau photovoltaïque). Les solutions à ce problème reposent sur la minimisation de la consommation d'énergie électrique et sur l'optimisation de la charge des réserves d'énergie électrique. Les structures des dispositifs doivent néanmoins être simples, peu coûteuses et d'encombrement réduit.

De plus, il est important que des nouveaux capteurs, à faible consommation d'énergie, soient compatibles avec les récepteurs existants.

Différents procédés permettant d'économiser de l'énergie dans les dispositifs de capteur domotique et autonome sont connus.

On connaît par exemple du document WO 2005/114610 un procédé dans lequel un dispositif de capteur domotique émet de manière discrète des informations en minimisant le rapport des périodes d'émission et des périodes séparant deux périodes d'émission. Ceci a pour conséquence de réduire la consommation d'énergie.

On connaît du document US 2005/0030177 un dispositif de capteur domotique dans lequel la fréquence d'émission des informations dépend du niveau de charge de sa batterie.

On connaît également du document DE 299 23 046 un dispositif de capteur domotique autonome émettant un signal d'alerte lorsque le niveau d'énergie contenu dans ses batteries franchit à la baisse un seuil déterminé.

On connaît aussi des documents « Solar powered low power sensor module with a radio communication and a user interface » et US 2006/148410 des dispositifs de capteurs autonomes alimentés par des panneaux photovoltaïques.

Dans tous ces documents, la gestion de l'énergie n'est pas optimale.

Le but de l'invention est de fournir un procédé de fonctionnement d'un dispositif de capteur domotique autonome palliant les inconvénients énumérés ci-dessus. En particulier, l'invention propose un procédé de fonctionnement permettant une meilleure gestion des ressources énergétiques par une meilleure anticipation des variations des quantités d'énergie qui pourront être converties en énergie électrique.

Le procédé de fonctionnement selon l'invention est défini par la revendication 1.

Différents modes d'exécution du procédé selon l'invention sont définis par les revendications dépendantes 2 à 10.

Le dispositif de capteur domotique autonome selon l'invention est défini par la revendication 11.

Le dessin annexé représente, à titre d'exemples, un mode de réalisation d'un dispositif de capteur domotique autonome selon l'invention et un mode d'exécution d'un procédé de fonctionnement d'un tel dispositif.
La figure 1 est un schéma d'un mode de réalisation d'un dispositif de capteur domotique autonome selon l'invention.
La figure 2 est un digramme représentatif de l'activité du dispositif de capteur domotique autonome dans deux modes de fonctionnement différents.
La figure 3 est un tableau représentatif du comportement du dispositif de capteur domotique autonome dans deux modes de fonctionnement différents.
La figure 4 est un schéma de détail partiel d'un mode de réalisation d'un dispositif de capteur domotique autonome selon l'invention.

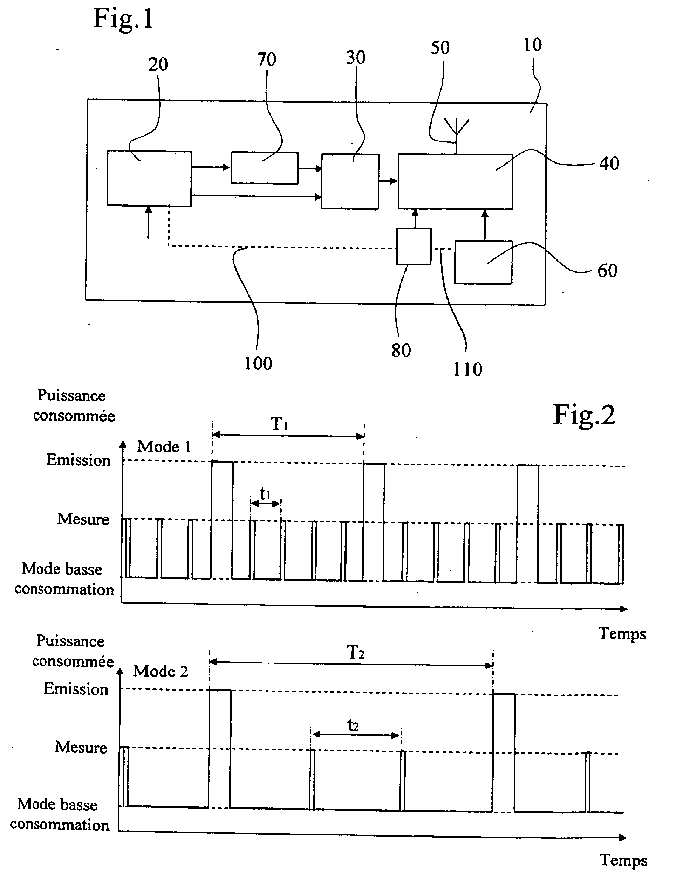

Le dispositif 10 de capteur domotique autonome représenté à la figure 1 permet de détecter un phénomène physique et/ou de mesurer l'intensité d'un phénomène physique, ce phénomène physique pouvant notamment être un éclairement, du vent, une vibration mécanique. Il comprend principalement un moyen 20 de conversion d'une énergie non électrique en une énergie électrique, un moyen 30 de stockage d'énergie électrique, un microcontrôleur 40, un émetteur 50 de signaux électromagnétiques (par exemple radioélectriques), un moyen de détection 60, un convertisseur de tension 70 et un moyen 80 de détermination de la puissance instantanée convertible en énergie électrique.

Le moyen de conversion d'énergie peut utiliser une énergie telle que la lumière, la chaleur, une vibration, un mouvement, une onde électromagnétique ou toute autre forme d'énergie disponible dans un bâtiment ou à proximité de celui-ci pour la convertir en une énergie électrique. De préférence, on convertit la lumière en énergie électrique et on utilise pour ce faire une cellule photovoltaïque. De préférence, le moyen de stockage d'énergie électrique comprend un condensateur ou une batterie. On peut aussi utiliser plusieurs condensateurs. Le microcontrôleur comprend des modules logiciels définissant le fonctionnement du dispositif de capteur domotique autonome. De préférence, le microcontrôleur est du type à basse consommation d'énergie. Par exemple, il peut être basculé dans un mode de sommeil et peut fonctionner avec différentes fréquences d'horloge. Un microcontrôleur auxiliaire peut éventuellement être prévu pour piloter l'émetteur 50. Dans ce cas, le microcontrôleur auxiliaire peut être intégré à l'émetteur.

L'émetteur est de préférence du type à radiofréquences émettant des ondes radio à une fréquence comprise entre 30 MHz et 2,4 GHz. Il émet régulièrement un signal d'état permettant d'informer sur l'état de fonctionnement du dispositif domotique autonome n'importe quel élément du réseau domotique dont fait partie ce dispositif. Chaque signal émis comporte de préférence une pluralité de trames contenant chacune la même information afin d'assurer une bonne transmission de cette information malgré d'éventuelles perturbations électromagnétiques. De préférence, ces trames comprennent également un identifiant.

Le moyen de détection 60 comprend un ou plusieurs capteurs. Dans un mode de réalisation préféré, au moins l'un des capteurs constitue ou fait partie du moyen de détermination de la puissance instantanée convertible en énergie électrique. Par exemple, si le moyen de conversion d'énergie 20 permet la transformation d'énergie solaire en énergie électrique, un des capteurs permet de détecter ou de mesurer une luminosité. D'autres paramètres de phénomènes physiques qu'il est possible de détecter ou mesurer grâce à des capteurs additionnels sont notamment, la vitesse du vent, la direction du vent, la température, la présence de pluie, la présence de neige, la pression, l'humidité, la présence de feu, la présence de fumée, la présence d'un utilisateur, la qualité de l'air, le bris d'un vitrage, la concentration en gaz (par exemple en dioxyde de carbone, monoxyde de carbone, en oxygène ou en composés organiques volatils).

En plus d'une émission périodique d'un signal d'état, le dispositif de capteur domotique autonome émet grâce à son émetteur un signal relatif à des données fournies par le ou les capteurs. Ce signal peut comprendre les valeurs absolues des intensités des phénomènes physiques mesurés. Il peut aussi comprendre des informations logiques relatives à ces phénomènes physiques (par exemple présence ou absence de fumée, température inférieure ou supérieure à un seuil fixé). Dans le cas d'informations logiques de dépassement de seuils, le signal peut n'être envoyé que lorsque la valeur a dépassé le seuil pendant une durée prédéterminée. Ces seuils peuvent être avantageusement réglés par l'utilisateur. De préférence, le dispositif de capteur domotique autonome comprend un convertisseur de tension du type élévateur afin d'adapter la tension de sortie du moyen de conversion d'énergie à celle nécessaire à la charge du moyen de stockage. Selon la charge du moyen de stockage, il est préférable de ne pas utiliser le convertisseur de tension. Le microcontrôleur présente de manière préférée des moyens permettant d'activer ou de désactiver le convertisseur de tension selon la charge du moyen de stockage.

Une sortie d'un capteur du moyen de détection 60 est reliée au microcontrôleur. Ainsi, en fonction du signal transmis de ce capteur au microcontrôleur, ce dernier exécute un premier module logiciel définissant un premier mode de fonctionnement du dispositif de capteur domotique autonome ou un deuxième module logiciel définissant un deuxième mode de fonctionnement du dispositif de capteur domotique autonome. Dans le cas où le moyen de conversion est une cellule photovoltaïque, le signal transmis au microcontrôleur comprend une information de l'intensité de l'éclairement. Cette information est comparée à un seuil pour activer ou non le premier ou deuxième mode de fonctionnement. Dans les deux modes, sensiblement les mêmes fonctions sont assurées. Cependant, le deuxième mode de fonctionnement permet de plus grandes économies d'énergie. Ces économies d'énergie sont évidemment réalisées en limitant la consommation électrique du dispositif dans le deuxième mode comparativement à ce que ce dispositif consomme dans le premier mode, toutes choses étant égales par ailleurs. Notamment, les consommations électriques du microcontrôleur 40 et/ou de l'émetteur 50 et/ou du moyen de conversion de tension 70 sont limitées dans ce deuxième mode. Il est également possible de limiter la consommation électrique de tout autre moyen consommateur d'énergie électrique du dispositif. Pour ce faire, plusieurs actions peuvent être menées simultanément ou non :
- la période entre deux émissions de signaux d'état est augmentée, c'est-à-dire que la fréquence des émissions de signaux d'état est réduite,
- le nombre de trames émises dans chaque signal d'état est diminué,
- la période entre deux émissions de signaux de données est augmentée, c'est-à-dire que la fréquence des émissions de signaux de données est réduite,
- le microcontrôleur fonctionne à différentes fréquences selon la fonction assurée par le dispositif de capteur domotique autonome (mesure, émission),
- le moyen de conversion d'énergie alimente directement le moyen de stockage.

Toutes ces actions, menées individuellement, permettent de limiter la consommation électrique du dispositif. En outre, n'importe quelle combinaison de plusieurs de ces actions permet également de limiter la consommation électrique du dispositif.

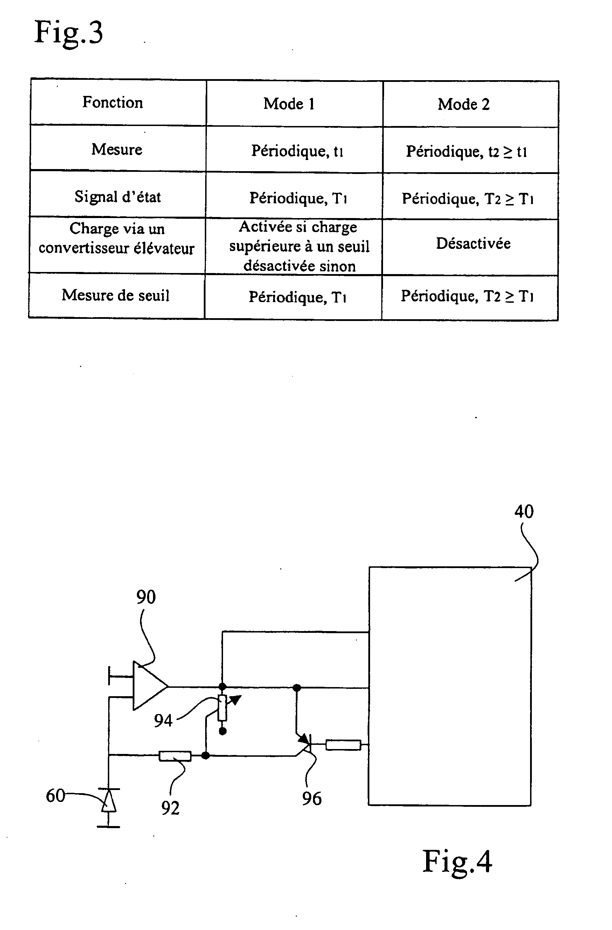

Les deux modes de fonctionnement sont décrits de manière plus détaillée aux figures 2 et 3. Dans le mode de réalisation préféré où le moyen de conversion est une cellule photovoltaïque et où l'un des capteurs est une photodiode, ce capteur est utilisé pour déterminer quelle est la puissance instantanée convertible en énergie électrique. Si cette puissance instantanée, ou une valeur définie à partir d'un échantillon de puissances mesurées (par exemple une moyenne globale), est supérieure à un seuil, c'est-à-dire si l'éclairement mesuré par la photodiode est supérieur à un seuil prédéterminé, le dispositif de capteur fonctionne selon un premier mode. Par contre, si cette puissance instantanée, ou une valeur définie à partir d'un échantillon de puissances mesurées, est inférieure à un seuil, c'est-à-dire si l'éclairement mesuré par la photodiode est inférieur à ce seuil prédéterminé, le dispositif de capteur fonctionne selon un deuxième mode.

Dans le premier mode, l'éclairement est mesuré selon une période t1 grâce à la photodiode. Le microcontrôleur fonctionne alors selon une première fréquence d'horloge f par exemple 32 KHz définissant une période t. Entre les mesures, le microcontrôleur est basculé dans un état de basse consommation, par exemple en mode sommeil. Dans ce mode le rapport des périodes de fonctionnement en état de basse consommation et de fonctionnement selon la première fréquence d'horloge est supérieur à 50. Lorsque le dispositif de capteur domotique autonome transmet un signal de statut grâce à son émetteur, le microcontrôleur fonctionne alors selon une deuxième fréquence d'horloge f supérieure à la première par exemple 2 MHz. La période T1 séparant deux émissions consécutives d'un signal d'état peut être au moins 10 fois supérieure à celle séparant deux mesures différentes (T1 > 10 x t1). De préférence, la mesure de la puissance instantanée convertible en énergie électrique (permettant de déterminer si le dispositif doit ou non changer de mode de fonctionnement) est réalisée au moment d'envoyer le signal de statut.

En plus de ces actions de mesure et de transmission, le dispositif de capteur domotique autonome peut émettre d'autres signaux grâce à son émetteur, ces signaux contenant des données de mesures effectuées par les capteurs ou des données déduites de comparaisons de ces mesures avec des seuils. Par exemple, ces signaux peuvent indiquer l'apparition ou la disparition du soleil pour commander en conséquence un dispositif de protection solaire.

Dans le deuxième mode, le dispositif de capteur domotique autonome ne transmet que des signaux d'état et vérifie si la condition de changement de mode de fonctionnement est réalisée.

Dans le deuxième mode, l'éclairement est mesuré grâce à la photodiode selon une période t2 bien supérieure à la période t1. De préférence, la période t2 est un multiple de la période t1. La fréquence peut même être nulle. Dans ce cas, l'éclairement peut être uniquement mesuré lorsque l'on teste si la condition de changement de mode de fonctionnement est réalisée. Dans le but de réduire la consommation d'énergie dans cette période de faible puissance convertible, la période T2 de transmissions des signaux d'état est plus importante que celle du premier mode. Le nombre de trames émises dans le signal d'état est également réduit.

De préférence, la période T2 est un multiple de la période T1.De cette manière, un ancien récepteur appartenant à une gamme de produit d'une génération antérieure au dispositif de capteur selon l'invention peut fonctionner avec ce dispositif de capteur. En effet, ce récepteur considèrera les trames manquantes dans le deuxième mode de fonctionnement par rapport au premier mode de fonctionnement comme étant dues à des erreurs de transmission. Par exemple, un récepteur d'ancienne génération est prévu pour fonctionner avec un dispositif de capteur d'ancienne génération émettant toutes les 15 minutes, le récepteur considérant le dispositif de capteur en état s'il reçoit un signal au moins toutes les 45 minutes. On s'aperçoit que si le dispositif de capteur selon l'invention émet toutes les 15 minutes dans un premier mode et toutes les 30 minutes ou toutes les 45 minutes dans un deuxième mode, il peut fonctionner de manière compatible avec le récepteur de génération antérieure.

De préférence, il est intéressant d'adapter les conditions de charge du moyen de stockage d'énergie à la quantité d'énergie convertible en énergie électrique. Ainsi, dans un mode d'exécution préféré, les conditions de charge du moyen de stockage dépendent du mode de fonctionnement du dispositif de capteur domotique autonome. Dans le premier mode de fonctionnement, le moyen de stockage est chargé par l'intermédiaire d'un convertisseur-élévateur de tension ou directement depuis le moyen de conversion d'énergie selon le niveau de charge du moyen de stockage. Dans le deuxième mode de fonctionnement, le moyen de conversion est toujours chargé directement depuis le moyen de conversion d'énergie.

Un circuit de détermination de la puissance instantanée convertible en énergie électrique est décrit en référence à la figure 4. Dans le cas décrit, l'énergie solaire est utilisée pour charger le moyen de stockage d'énergie électrique et le moyen 20 de conversion (non représenté) est un panneau photovoltaïque. Un capteur comprend une photodiode 60 qui est aussi utilisée comme moyen 80 pour déterminer la quantité instantanée d'énergie convertible en énergie électrique. Ce circuit est contrôlé par le microcontrôleur 40. Un amplificateur opérationnel 90 permet d'amplifier le courant de court-circuit de la photodiode 60. La tension aux bornes d'une résistance 92 et d'une résistance variable 94 placées en série entre une entrée et la sortie de l'amplificateur opérationnel est comparée à une tension seuil par le microcontrôleur. Ceci permet par exemple de détecter les apparitions et disparitions du soleil. La résistance variable peut être ajustée dans ce but. Un transistor 96 est disposé en parallèle de la résistance variable et son état « passant » ou « bloqué » correspond après réglage de la résistance variable à la présence ou à l'absence de soleil.

Le document US 4,695,785, donne par exemple un autre mode de réalisation du moyen de détermination 80 qui pourrait être utilisé sans sortir du cadre de l'invention.

Grâce à l'invention, une meilleure anticipation des problèmes d'autonomie est possible grâce à une évaluation des quantités d'énergie susceptibles d'être converties en énergie électrique et à une consommation d'énergie électrique adaptée à ces quantités évaluées.

Sur la figure 1, la liaison en traits pointillés 100 entre le moyen 20 de conversion d'énergie et le moyen 80 de détermination signifie que, dans un mode de réalisation, les fonctions de ces moyens peuvent être assurées par un même élément. La liaison en traits pointillés 110 entre le moyen 60 de détection et le moyen 80 de détermination signifie que, dans un mode de réalisation, les fonctions de ces moyens peuvent être assurées par un même élément.

## Revendications

1. Procédé de fonctionnement d'un dispositif (10) de capteur domotique autonome pour détecter l'existence et/ou mesurer l'intensité d'un premier phénomène physique, comprenant un moyen (20) de conversion d'un effet d'un deuxième phénomène physique en énergie électrique pour alimenter le dispositif et un moyen (80) de détermination de la puissance instantanée du deuxième phénomène physique qui est convertible en énergie électrique, **caractérisé en ce qu'**un premier mode de fonctionnement normal du dispositif ou un deuxième mode de fonctionnement à économie d'énergie du dispositif est activé selon une valeur définie à partir de la détermination de la puissance instantanée convertible en énergie électrique, le dispositif ayant une consommation électrique plus réduite dans le deuxième mode que dans le premier mode, la réduction de consommation électrique étant obtenue par au moins une des caractéristiques suivantes :
- la fréquence de mesure de l'intensité du premier phénomène physique est plus grande dans le premier mode de fonctionnement que dans le deuxième mode de fonctionnement,
- la fréquence d'envoi de signaux d'état et/ou de données est plus grande dans le premier mode de fonctionnement que dans le deuxième mode de fonctionnement,
- un nombre de trames émises dans un signal d'état est plus grand dans le premier mode de fonctionnement que dans le deuxième mode de fonctionnement,
- une unité logique de traitement (40) fonctionne, dans le premier mode de fonctionnement, à une fréquence supérieure à celle à laquelle elle fonctionne dans le deuxième mode de fonctionnement,
- un moyen (30) de stockage d'énergie électrique est chargé par l'intermédiaire d'un convertisseur-élévateur (70) ou directement depuis le moyen de conversion d'un effet du deuxième phénomène physique en énergie électrique selon le niveau de charge du moyen de stockage, dans le premier mode de fonctionnement, le moyen de stockage d'énergie électrique étant en permanence chargé directement depuis le moyen de conversion d'un effet du deuxième phénomène physique en énergie électrique, dans le deuxième mode de fonctionnement.

2. Procédé de fonctionnement selon la revendication précédente, **caractérisé en ce que** le premier et le deuxième phénomènes physiques sont identiques.

3. Procédé de fonctionnement selon l'une des revendications précédentes, **caractérisé en ce que** le dispositif n'émet que lorsque l'intensité du premier phénomène physique vérifie un critère prédéterminé.

4. Procédé de fonctionnement selon la revendication précédente, **caractérisé en ce que** le critère prédéterminé peut être redéfini par l'utilisateur.

5. Dispositif (10) de capteur domotique autonome, **caractérisé en ce qu'**il comprend des moyens matériels (20, 30, 40, 70, 80) et logiciels pour la mise en oeuvre du procédé de fonctionnement défini selon l'une des revendications 1 à 4.

## Claims

1. A method of operating a self-powered home automation sensor device (10) for detecting the existence and/or for measuring the intensity of a fist physical phenomenon, comprising a means (20) for converting an effect of a second physical phenomenon into electrical energy in order to supply the device and a means (80) for determining the instantaneous power of the second physical phenomenon that can be converted into electrical energy, **characterized in that** a normal, first mode of operation of the device or an energy-saving second mode of operation of the device is activated according to a value defined on the basis of the determination of the instantaneous power that can be converted into electrical energy, the device having a lower electrical consumption in the second mode than in the first mode, the reduction of the electrical consumption being obtained by at least one of the following characteristics:
- the frequency of measurement of the intensity of the first physical phenomenon is greater in the first operating mode than in the second operating mode,
- the frequency of transmitting status and/or data signals is greater in the first operating mode than in the second operating mode,
- a number of frames transmitted in a status signal is greater in the first operating mode than in the second operating mode,
- a logic processing unit (40) operates, in the first operating mode, at a greater frequency than the frequency at which it operates in the second operating mode,
- an electrical energy storage means (30) is charged by a step-up converter (70) or directly from the conversion means of an effect of the second physical phenomenon into electrical energy according to the level of charge of the storage means, in the first operating mode, the electrical energy storage means being permanently directly charged from the conversion means of an effect of the second physical phenomenon into electrical energy, in the second operating mode.

2. Operating method according to the preceding claim, **characterized in that** the first and the second physical phenomena are identical.

3. Operating method according to one of the preceding claims, **characterized in that** the device transmits only when the intensity of the first physical phenomenon meets a predetermined criterion.

4. Operating method according to the preceding claim, **characterized in that** the predetermined criterion may be redefined by the user.

5. A self-powered home automation sensor device (10), **characterized in that** it comprises hardware means (20, 30, 40, 70, 80) and software for implementing the operating method according to one of claims 1 to 4.

## Patentansprüche

1. Verfahren zum Betreiben einer autonomen domotischen Messfühler-Vorrichtung (10) zum Erfassen des Vorhandenseins und/oder zum Messen der Stärke eines ersten physikalischen Phänomens, mit einem Mittel (20) zum Umwandeln eines Effekts eines zweiten physikalischen Phänomens in elektrische Energie, um die Vorrichtung und ein Mittel (80) zum Bestimmen der momentanen Leistung des zweiten physikalischen, in elektrische Energie umwandelbaren Phänomens zu speisen, **dadurch gekennzeichnet, dass** eine erste normale Betriebsweise der Vorrichtung oder eine zweite energiesparende Betriebsweise der Vorrichtung gemäss einem bestimmten Wert, ausgehend von der Bestimmung der momentanen, in elektrische Energie umwandelbaren Leistung, aktiviert wird, und dass die Vorrichtung bei der zweiten Be-triebsweise einen geringeren elektrischen Verbrauch als bei der ersten Betriebsweise hat, wobei die Verringerung des elektrischen Verbrauchs durch wenigstens eines der folgenden Merkmale erhalten wird:
- Die Frequenz der Messung der Stärke des ersten physikalischen Phänomens ist bei der ersten Betriebsweise grösser als bei der zweiten Betriebsweise,
- die Frequenz der Aussendung des Meldesignals und/oder der Daten ist bei der ersten Betriebsweise grösser als bei der zweiten Betriebsweise,
- eine Anzahl der in einem Meldesignal ausgesandten Datenblöcke ist bei der ersten Betriebsweise grösser als bei der zweiten Betriebsweise,
- eine logische Verarbeitungseinheit (40) arbeitet bei der ersten Betriebsweise mit einer höheren Frequenz als bei der zweiten Betriebweise,
- ein Mittel (30) zum Speichern elektrischer Energie wird bei der ersten Betriebsweise mit Hilfe eines spannungserhöhenden Wandlers (70) oder direkt von dem einen Effekt des zweiten physikalischen Phänomens in elektrische Energie umwandelnden Mittels gemäss dem Ladungszustand des Speichermittels geladen, während bei der zweiten Betriebsweise das elektrische Energie speichernde Mittel ständig von dem einen Effekt des zweiten physiksalischen Phänomens in elektrische Energie umwandelnden Mittels geladen wird.

2. Verfahren nach dem vorangehenden Anspruch, **dadurch gekennzeichnet, dass** das erste und das zweite physikalische Phänomen identisch sind.

3. Verfahren nach einem der vorangehenden Ansprüche, **dadurch gekennzeichnet, dass** die Vorrichtung nur sendet, wenn die Stärke des ersten physikalischen Phänomens ein vorbestimmtes Kriterium erfüllt.

4. Verfahren nach dem vorangehenden Anspruch, **dadurch gekennzeichnet, dass** das vorbestimmte Kriterium vom Benutzer neu definiert werden kann.

5. Autonome domotische Messfühler-Vorrichtung (10), **dadurch gekennzeichnet, dass** sie Hardware-Mittel (20, 30, 40, 70, 80) und Software-Mittel zur Durchführung des Verfahrens nach einem der Ansprüche 1 bis 4 aufweist.
